# EUROPEAN PATENT APPLICATION

(11) **EP 4 220 754 A1**
(43) Date of publication of application: **02.08.2023**
(21) Application number: 22827039.3
(22) Date of filing: 04.03.2022
(51) Int. Cl.: H01M 4/133, H01M 4/134, H01M 4/36, H01M 4/40, H01M 4/583, H01M 4/62, H01M 10/052

(54) **LITHIUM METAL NEGATIVE ELECTRODE PLATE, ELECTROCHEMICAL APPARATUS, AND ELECTRONIC DEVICE**

(30) Priority: 26.06.2021 CN 202110742796
(71) Applicant: Contemporary Amperex Technology Co., Limited, Ningde, Fujian 352100 (CN)
(72) Inventor: ZENG, Yuqun, Ningde, Fujian 352100 (CN)
(74) Representative: Gong, Jinping
(86) International application number: PCT/CN2022/079229
(87) International publication number: WO 2022/267534

(57) **Abstract**

This application provides a lithium metal negative electrode plate, an electrochemical apparatus, and an electronic device. The lithium metal negative electrode plate includes copper foil and a carbon material coating layer formed on at least part of a surface of the copper foil, where thickness of the carbon material coating layer is less than or equal to 10 µm, and the carbon material coating layer includes a carbon material and a polymer binder. The lithium metal negative electrode plate, the electrochemical apparatus, and the electronic device provided in this application can effectively suppress formation and growth of lithium dendrites, thereby significantly improving first-cycle charge-discharge coulombic efficiency, cycling stability performance, and safety performance of batteries.

## Description

### CROSS-REFERENCE TO RELATED APPLICATIONS

This application claims priority to Chinese Patent Application No. 202110742796.8, filed on June 26, 2021 and entitled "LITHIUM METAL NEGATIVE ELECTRODE PLATE, ELECTROCHEMICAL APPARATUS, AND ELECTRONIC DEVICE", which is incorporated herein by reference in its entirety.

### TECHNICAL FIELD

This application relates to the field of energy storage technologies, and specifically, to a lithium metal negative electrode plate, an electrochemical apparatus, and an electronic device.

### BACKGROUND

With increasingly prominent energy and environmental issues, the new energy industry has received growing attention. Secondary batteries have been widely used as important new energy storage apparatuses in recent years by virtue of their features such as high energy density and good cycling performance. Currently, negative electrode active materials of commercialized secondary batteries are mainly graphite. Due to a low theoretical lithiation capacity, only 372 mAh/g, of graphite itself, with only design structure and manufacturing processes of the batteries improved, it is difficult to increase energy density, which limits the application of the batteries in the fields needing high energy output. Therefore, a negative electrode active material with higher specific energy is needed.

Lithium metal negative electrodes have been considered as a final solution of negative electrodes of lithium-ion batteries due to advantages such as high theoretical capacity (3860 mAh/g), low electrochemical potential (-3.040 V vs. SHE), and high electrochemical reversible capacity. However, the problems of large volume swelling and growth of lithium dendrites of the lithium metal negative electrodes produced during charging and discharging cause their serious shortcomings in cycle life and safety, and thus commercial application cannot be really achieved.

Therefore, currently, how growth of lithium dendrites is suppressed to improve cycling performance of batteries is a technical problem to be resolved urgently.

### SUMMARY

In view of this, this application provides a lithium metal negative electrode plate, an electrochemical apparatus, and an electronic device, which can effectively suppress formation and growth of lithium dendrites to significantly improve first-cycle charge-discharge coulombic efficiency, cycling stability performance, and safety performance of a battery.

According to a first aspect, this application provides a lithium metal negative electrode plate. The lithium metal negative electrode plate includes:
copper foil;
a carbon material coating layer formed on at least part of a surface of the copper foil, where thickness of the carbon material coating layer is less than or equal to 10 µm, and the carbon material coating layer includes a carbon material and a polymer binder; and
a lithium metal alloy formed on at least part of a surface of the carbon material coating layer.

In some feasible embodiments, the negative electrode plate satisfies at least one of the following conditions:
(1) the carbon material includes at least one of meso-carbon microbeads, graphite, natural graphite, expanded graphite, artificial graphite, glassy carbon, carbon-carbon composite material, carbon fibers, hard carbon, porous carbon, highly oriented graphite, three-dimensional graphite, carbon black, carbon nanotubes, and graphene;
(2) a mass percentage of the carbon material in the carbon material coating layer is 90% to 99%;
(3) the thickness of the carbon material coating layer is 0.3 µm to 10 µm; and
(4) the thickness of the carbon material coating layer is 1 µm to 7 µm.

In some feasible embodiments, the lithium metal negative electrode plate satisfies at least one of the following conditions:
(5) the carbon material includes an oxygen-containing group, where the oxygen-containing group is selected from at least one of carboxyl group, hydroxyl group, and ether group; and
(6) the carbon material includes an oxygen-containing group, where a mass percentage of oxygen atoms in the carbon material is ≥ 0.1%.

In some feasible embodiments, a chemical formula of the lithium metal alloy is LiR, where metal R is selected from at least one of Ag, Mo, In, Ge, Bi, and Zn.

In some feasible embodiments, the lithium metal negative electrode plate satisfies at least one of the following conditions:
(7) a mass percentage of element R in the lithium metal alloy is 1% to 10%; and
(8) the lithium metal alloy is a solid solution alloy.

In some feasible embodiments, the polymer binder includes at least one of sodium cellulose, sodium carboxymethyl cellulose, hydroxypropyl cellulose, sodium hydroxymethyl cellulose, potassium hydroxymethyl cellulose, diacetyl cellulose, polyacrylic acid, sodium alginate, styrene-butadiene rubber, acrylic butadiene rubber, polypyrrole, polyaniline, epoxy resin, and guar gum.

According to a second aspect, this application provides an electrochemical apparatus, including a positive electrode plate, a negative electrode plate, a separator, and an electrolyte, where the negative electrode plate is the negative electrode plate according to the first aspect.

In some feasible embodiments, the electrochemical apparatus includes a positive electrode plate, a negative electrode plate, a separator, and an electrolyte, where the electrolyte includes a solvent and a lithium salt, and the electrolyte satisfies at least one of the following conditions:
(9) the lithium salt includes at least one of lithium hexafluorophosphate, lithium tetrafluoroborate, lithium difluorophosphate, lithium bis(trifluoromethanesulfonyl)imide, lithium bis(fluorosulfonyl)imide, lithium bis(oxalato)borate, or lithium difluoro(oxalato)borate;
(10) the solvent includes ethylene glycol dimethyl ether and 1,3-dioxolane;
(11) the solvent includes ethylene glycol dimethyl ether and 1,3-dioxolane, where a volume ratio of the ethylene glycol dimethyl ether and the 1,3-dioxolane is (0.5-10): 1; and
(12) a concentration of the electrolyte is 0.5 mol/L to 7 mol/L.

In some feasible embodiments, the electrolyte satisfies at least one of the following conditions:
(13) the electrolyte further includes an additive, where the additive includes at least one of trioxymethylene, lithium nitrate, dioxane, lithium fluorosulfonate, and fluoroethylene carbonate; and
(14) the electrolyte further includes an additive, where a mass percentage of the additive in the electrolyte is 0.1% to 10%.

According to a third aspect, this application provides an electronic device. The electronic device includes the electrochemical apparatus according to the second aspect.

Compared with the prior art, this application has at least the following beneficial effects.

According to the lithium metal negative electrode plate, the electrochemical apparatus, and the electronic device provided in this application, on the lithium metal negative electrode plate, the lithium metal alloy is formed on the surface of the carbon material coating layer, and the lithium metal alloy may undergo a phase change through its own alloy phase during lithium intercalation and deintercalation, so that lithium ions grow along the alloy phase toward the inside of the carbon material coating layer rather than toward the separator during intercalation to form lithium dendrites, which can effectively suppress growth of the lithium dendrites, thereby increasing energy density of a battery and improving cycling performance of the battery.

### BRIEF DESCRIPTION OF DRAWINGS

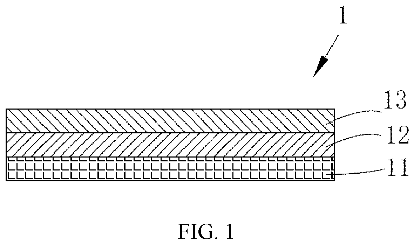

FIG. 1 is a schematic structural diagram of a lithium metal negative electrode plate according to an embodiment of this application.

### DESCRIPTION OF EMBODIMENTS

The following descriptions are preferred implementations of embodiments of this application. It should be noted that a person of ordinary skill in the technical field may make several improvements and refinements without departing from the principle of the embodiments of this application, and these improvements and refinements shall also fall within the protection scope of the embodiments of this application.

For simplicity, only some numerical ranges are explicitly disclosed in this specification. However, any lower limit may be combined with any upper limit to form a range not explicitly recorded; any lower limit may be combined with another lower limit to form a range not explicitly recorded; and any upper limit may be combined with any other upper limit to form a range not explicitly recorded. In addition, although not explicitly recorded, each point or individual value between endpoints of a range is included in the range. Therefore, each point or individual value may be used as its own lower limit or upper limit to be combined with any other point or individual value or combined with any other lower limit or upper limit to form a range not explicitly recorded.

In the description of this specification, it should be noted that, unless otherwise stated, "more than" and "less than" are inclusive of the present number, and "more" in "one or more" means more than two.

The foregoing invention content of this application is not intended to describe each of the disclosed embodiments or implementations of this application. The following description illustrates exemplary embodiments in more detail by using examples. Throughout this application, guidance is provided by using a series of embodiments, and these embodiments may be used in various combinations. In the examples, enumeration is merely representative and should not be interpreted as exhaustive.

### First aspect

This application provides a lithium metal negative electrode plate. As shown in FIG. 1, the lithium metal negative electrode plate includes: copper foil 11; a carbon material coating layer 12 formed on at least part of a surface of the copper foil 11, where thickness of the carbon material coating layer is less than or equal to 10 µm, and the carbon material coating layer 12 includes a carbon material and a polymer binder; and a lithium metal alloy 13 formed on at least part of a surface of the carbon material coating layer 12.

In the foregoing solution, on the lithium metal negative electrode plate, the lithium metal alloy 13 is formed on the surface of the carbon material coating layer 12, and the lithium metal alloy may undergo a phase change through its own alloy phase during lithium intercalation and deintercalation, so that lithium ions grow along the alloy phase toward the inside of the carbon material coating layer 12 rather than toward a separator during intercalation to form lithium dendrites, which can effectively suppress growth of the lithium dendrites, thereby increasing energy density of a battery and improving cycling performance of the battery.

It can be understood that a solid solution alloy phase of the lithium metal alloy 13 provides a higher lithium atom diffusion coefficient than lithium metal. During lithium intercalation, lithium atoms generated on an interface between the lithium metal alloy and an electrolyte diffuse into the electrode plate to form lithium alloy. However, during lithium deintercalation, lithium atoms generated by dealloying can be quickly released within a discharging time, thereby increasing first-cycle specific discharge capacity of the battery.

The carbon material coating layer 12 can improve conductivity for lithium-ion diffusion and reduce lithiation overpotential, thereby suppressing the formation and growth of the lithium dendrites.

In an optional technical solution in this application, the thickness of the carbon material coating layer 12 is 0.3 µm to 10 µm, and specifically, may be 0.3 µm, 0.5 µm, 1.0 µm, 1.4 µm, 1.8 µm, 2.2 µm, 3.5 µm, 4.0 µm, 4.5 µm, 4.9 µm, 5.5 µm, 6.0 µm, 7.0 µm, 8.0 µm, 9.2 µm, or 10 µm, or certainly may be other values within the foregoing range, which is not limited herein. When the carbon material coating layer on the surface of the copper foil 11 is excessively thick, the energy density of the battery is decreased. When the carbon material coating layer on the surface of the copper foil 11 is excessively thin, there are very few nucleation sites of the lithium metal, and the lithiation overpotential cannot be effectively reduced, so that the lithium dendrites are prone to grow toward the separator, thereby deteriorating the cycling performance of the battery. Preferably, the thickness of the carbon material coating layer is 1 µm to 7 µm, and more preferably, the thickness of the carbon material coating layer is 3 µm to 5 µm.

In an optional technical solution in this application, the carbon material coating layer 12 includes the carbon material and the polymer binder. The carbon material includes at least one of meso-carbon microbeads, graphite, natural graphite, expanded graphite, artificial graphite, glassy carbon, carbon-carbon composite material, carbon fibers, hard carbon, porous carbon, highly oriented graphite, three-dimensional graphite, carbon black, carbon nanotubes, and graphene. It can be understood that forming the carbon material coating layer on the surface of the copper foil can improve kinetic performance of nucleation of the lithium metal, reduce the lithiation overpotential, and suppress the formation and growth of the lithium dendrites. In addition, this can alleviate the problem of poor affinity between the lithium metal and the copper foil, improve adhesion between the lithium metal and the electrode plate, and improve the conductivity for lithium-ion diffusion.

Preferably, the carbon material includes at least two of meso-carbon microbeads, graphite, natural graphite, expanded graphite, artificial graphite, glassy carbon, carbon-carbon composite material, carbon fibers, hard carbon, porous carbon, highly oriented graphite, three-dimensional graphite, carbon black, carbon nanotubes, and graphene. In an embodiment, the carbon material may be a mixture of carbon black, graphene, and carbon nanotubes, and a mass ratio thereof is 1:1:1. It can be understood that compared with the use of a single carbon material, the mixed use of two or more than two carbon materials can increase dimensions of conductive performance of the carbon materials, thereby improving the conductive performance of the carbon material.

In an optional technical solution in this application, a mass percentage of the carbon material in the carbon material coating layer 12 is 90% to 99%, and specifically, may be 90%, 90.5%, 91%, 91.3%, 92.8%, 94%, 94.8%, 95%, 95.6%, 96.2%, 96.5%, 97%, 98%, or 99%, or certainly may be other values within the foregoing range, which is not limited herein. When the mass percentage of the carbon material in the coating layer is excessively high, that is, a mass percentage of the polymer binder is excessively low, adhesion of the carbon material coating layer is decreased, and the problems such as peeling off and cracking of the coating layer are prone to occur during processing. When the mass percentage of the carbon material in the carbon material coating layer is excessively low, conductive performance of the carbon material coating layer is decreased, so that the lithiation overpotential cannot be effectively reduced, and the lithium dendrites are prone to be formed, thereby decreasing the cycling performance of the battery. Preferably, the mass percentage of the carbon material in the carbon material coating layer 12 is 94% to 97%.

In an optional technical solution in this application, the carbon material includes an oxygen-containing group, where the oxygen-containing group may be selected from at least one of carboxyl group, hydroxyl group, and ether group. The lithium metal alloy deposits on a surface of the carbon material coating layer farther away from the copper foil. The carbon material includes the oxygen-containing group, and the oxygen-containing group has good lithiophilicity and it is easy to combine it preferentially with lithium ions to form a uniform lithium metal core, reducing overpotential of a subsequent lithiation reaction. As a result, during cycling of the battery, the lithium ions are promoted to grow along the alloy phase toward the inside of the carbon material coating layer 12 during intercalation, which suppresses the formation and growth of the lithium dendrites, thereby improving cycling performance of the lithium metal negative electrode plate.

In an optional technical solution in this application, a mass percentage of oxygen atoms in the carbon material is ≥ 0.1%, and specifically, the mass percentage of the oxygen atoms may be 0.1%, 0.2%, 0.3%, 0.4%, 0.5%, 0.6%, 0.7%, 0.8%, 0.9%, or 1%, or certainly may be other values within the foregoing range, which is not limited herein. Controlling the mass percentage of the oxygen atoms in the carbon material can improve the kinetic performance of the nucleation of the lithium metal, reduce overpotential of the copper foil and the carbon material coating layer, and improve poor lithiophilicity between the lithium metal and the copper foil, thereby improving the adhesion between the lithium metal and the negative electrode plate. An excessively low percentage of the oxygen atoms in the carbon material is not conducive to forming the uniform lithium metal core.

In an optional technical solution in this application, the polymer binder in the carbon material coating layer 12 includes at least one of sodium cellulose, sodium carboxymethyl cellulose, hydroxypropyl cellulose, sodium hydroxymethyl cellulose, potassium hydroxymethyl cellulose, diacetyl cellulose, polyacrylic acid, sodium alginate, styrene-butadiene rubber, acrylic butadiene rubber, polypyrrole, polyaniline, epoxy resin, and guar gum. The polymer binder has high viscosity and mechanical strength, which can ensure integrity of a contact interface between the carbon material coating layer and the copper foil, and suppress the growth of the lithium dendrites, thereby improving the cycling performance.

Further, as shown in FIG. 1, the negative electrode plate 1 further includes the lithium metal alloy 13 formed on at least part of the surface of the carbon material coating layer 12 farther away from the copper foil 11. Because the lithium metal alloy has the solid solution alloy phase, the lithium metal alloy may undergo a phase change through its own solid solution alloy phase during lithium intercalation and deintercalation, so that released lithium atoms can penetrate into the lithium metal alloy to form an alloy phase rather than deposit on a surface of the negative electrode plate to form metal lithium, meaning that lithium atoms grow along the alloy phase toward the inside of the carbon material coating layer 12 during intercalation, thereby suppressing the growth of the lithium dendrites.

In an optional technical solution in this application, a chemical formula of the lithium metal alloy is LiR, where metal R is selected from at least one of Ag, Mo, In, Ge, Bi, and Zn. Specifically, a mass percentage of element R in the lithium metal alloy is 1% to 10%, and specifically, may be 1%, 2%, 3%, 4%, 5%, 6%, 7%, 8%, or 10%, or certainly may be other values within the foregoing range, which is not limited herein. When the mass percentage of element R in the lithium metal alloy is excessively high, a percentage of lithium in the lithium metal alloy is reduced, which affects kinetic performance of the battery, causing a decrease in energy density and rate performance of the battery. When the mass percentage of element R in the lithium metal alloy is excessively low, a percentage of a solid solution alloy in the lithium metal alloy is reduced, so that the growth of the lithium dendrites cannot be suppressed through the solid solution alloy phase change. Preferably, the mass percentage of element R in the lithium metal alloy is 3% to 7%.

In an optional technical solution in this application, a preparation method of the negative electrode plate includes the following steps.

A carbon material is put into a solution containing concentrated sulfuric acid and concentrated nitric acid mixed in a volume ratio of 3:1, followed by stirring for 2 h to 6 h, washing with deionized water, and filtering, and then the remains are dried in an oven at 60°C to 80°C.

The carbon material and a polymer are added into a solvent and stirred to a uniform slurry, and the slurry is applied onto copper foil and dried to obtain a required carbon material coating layer. The solvent includes at least one of water, acetone, N-methylpyrrolidone, dimethylformamide, and ethanol.

In an Ar atmosphere, lithium metal is put into a stainless crucible and heated to 280°C to 350°C to be completely melted, and then alloy component powder is added into the liquid lithium metal and fully stirred for 2 h to 6 h to ensure that the metal powder is uniformly mixed with the lithium metal liquid. After cooling, a lithium metal alloy active substance is obtained.

The lithium metal alloy active substance is compounded on a surface of the carbon material coating layer through cold pressing to obtain the lithium metal negative electrode plate.

### Second aspect

This application provides an electrochemical apparatus, including a positive electrode plate, a negative electrode plate, and an electrolyte, where the negative electrode plate is the lithium metal negative electrode plate according to the first aspect.

The positive electrode plate includes a positive electrode current collector and a positive electrode active substance layer formed on at least part of a surface of the positive electrode current collector, where the positive electrode active substance layer includes a positive electrode active material.

In an optional technical solution in this application, the positive electrode active material may be selected from lithium cobalt oxide, lithium nickel oxide, lithium manganese oxide, lithium nickel manganese oxide, lithium nickel cobalt manganese oxide, lithium nickel cobalt aluminum oxide, and olivine-structured lithium-containing phosphate. However, this application is not limited to these materials, and may alternatively use other conventional well-known materials that can be used as positive electrode active materials for lithium-ion batteries. Specifically, the positive electrode active material includes at least one of lithium cobalt oxide, lithium nickel cobalt manganate, lithium nickel cobalt aluminate, lithium manganate, lithium manganese iron phosphate, lithium vanadium phosphate, lithium vanadyl phosphate, lithium iron phosphate, and lithium titanate.

In an optional technical solution in this application, the positive electrode active substance layer may further include a positive electrode conductive material, thereby imparting conductive performance to the electrode. The positive electrode conductive material may include any conductive material, provided that the conductive material does not cause a chemical change. Non-limiting examples of the positive electrode conductive material include a carbon-based material (for example, natural graphite, artificial graphite, carbon black, acetylene black, Ketjen black, and carbon fibers), a metal-based material (for example, metal powder and metal fibers, including copper, nickel, aluminum, and silver), a conductive polymer (for example, a polyphenylene derivative), and a mixture thereof.

In an optional technical solution in this application, the positive electrode active substance layer may further include a binder to firmly bind a positive electrode active substance and an optional conductive agent on the positive electrode current collector. The binder is not limited to any specific type in this application, and may be selected according to actual needs. In an example, the binder may be at least one of polyvinylidene fluoride (PVDF), polytetrafluoroethylene (PTFE), polyacrylic acid (PAA), polyvinyl alcohol (PVA), ethylene vinyl acetate (EVA), styrene-butadiene rubber (SBR), carboxymethyl cellulose (CMC), sodium alginate (SA), polymethacrylic acid (PMA), and carboxymethyl chitosan (CMCS).

In an optional technical solution in this application, the positive electrode current collector may be made of a conductive carbon sheet, metal foil, carbon-coated metal foil, or a porous metal plate. A conductive carbon material of the conductive carbon sheet may be one or more of superconducting carbon, acetylene black, carbon black, Ketjen black, carbon dots, carbon nanotubes, graphite, graphene, and carbon nanofibers. Metal materials of the metal foil, the carbon-coated metal foil, and the porous metal plate may be each independently selected from at least one of copper, aluminum, nickel, and stainless steel.

A positive electrode current collector 11 is made of, for example, one or more of copper foil, aluminum foil, nickel foil, stainless steel foil, a stainless steel mesh, and carbon-coated aluminum foil, and preferably, aluminum foil.

The positive electrode plate may be prepared by using a conventional method in the art. Generally, the positive electrode active substance and the optional conductive agent and binder are dissolved in a solvent (for example, N-methylpyrrolidone, NMP for short) to form a uniform positive electrode slurry, and the positive electrode slurry is applied onto the positive electrode current collector, followed by drying and cold pressing, to obtain the positive electrode plate.

A separator in the electrochemical apparatus of this application may be made of various materials suitable for separators of electrochemical energy storage apparatuses in the art, for example, may include but is not limited to at least one of polyethylene, polypropylene, polyvinylidene fluoride, aramid, polyethylene terephthalate, polytetrafluoroethylene, polyacrylonitrile, polyimide, polyamide, polyester, and natural fibers.

The electrolyte in the electrochemical apparatus of this application includes a solvent, a lithium salt, and an additive.

The lithium salt in the electrolyte is selected from at least one of an organic lithium salt or an inorganic lithium salt. Specifically, the lithium salt may be selected from at least one of lithium hexafluorophosphate (LiPF₆), lithium tetrafluoroborate, lithium difluorophosphate, lithium bis(trifluoromethanesulfonyl)imide LiN(CF₃SO₂)₂ (LiTFSI for short), lithium bis(fluorosulfonyl)imide Li(N(SO₂F)₂) (LiFSI for short), lithium bis(oxalato)borate LiB(C₂O₄)₂ (LiBOB for short), and lithium difluoro(oxalato)borate LiBF₂(C₂O₄) (LiDFOB for short).

In an optional technical solution in this application, the solvent in the electrolyte includes ethylene glycol dimethyl ether (DME for short) and 1,3-dioxolane (DOL for short). A volume ratio of the ethylene glycol dimethyl ether and the 1,3-dioxolane is (0.5-10):1, and specifically, may be 0.5:1, 0.8:1, 1:1, 1.5:1, 1.8:1, 2.5:1, 3:1, 5:1, 6:1, 7:1, 8:1, 9:1, or 10:1, or certainly may be other values within the foregoing range, which is not limited herein. When the ratio of the ethylene glycol dimethyl ether and the 1,3-dioxolane is excessively large, meaning that a percentage of the ethylene glycol dimethyl ether is excessively high and a percentage of the 1,3-dioxolane is excessively low, it is difficult to form a stable solid-state electrolyte membrane by exploiting synergy between the 1,3-dioxolane and the ethylene glycol dimethyl ether. When the ratio of the ethylene glycol dimethyl ether and the 1,3-dioxolane is excessively small, meaning that a percentage of the 1,3-dioxolane is excessively high, the 1,3-dioxolane is prone to undergo a self-polymerization reaction, and it is difficult to form an effective solid-state electrolyte membrane, resulting in lithium precipitation of the battery. Preferably, the volume ratio of the ethylene glycol dimethyl ether and the 1,3-dioxolane is (1-7): 1. It should noted that mixing the foregoing two solvents helps the electrolyte form a more stable solid-state electrolyte membrane on a surface of the lithium metal alloy, and reduces side reactions, thereby suppressing the growth of the lithium dendrites.

In an optional technical solution in this application, a concentration of the electrolyte is 0.5 mol/L to 7 mol/L, and specifically, may be 0.5 mol/L, 0.8 mol/L, 1 mol/L, 1.5 mol/L, 2.0 mol/L, 3 mol/L, 4 mol/L, 5 mol/L, 6 mol/L, or 7 mol/L, or certainly may be other values within the foregoing range, which is not limited herein. When the concentration of the electrolyte is excessively high, viscosity of the electrolyte is excessively high, which affects processability and kinetic performance of the battery. When the concentration of the electrolyte is excessively low, a concentration of the lithium salt is excessively low, which aggravates concentration polarization during cycling, and promotes the growth of the lithium dendrites, thereby decreasing the cycling performance of the battery. Preferably, the concentration of the electrolyte is 2 mol/L to 5 mol/L. It can be understood that the use of the electrolyte within the foregoing concentration range can increase a concentration of lithium ions on an interface between the lithium metal and the electrolyte, minimizing the concentration polarization, thereby alleviating polarization growth of the lithium dendrites caused.

In an optional technical solution in this application, the electrolyte further includes an additive, where the additive includes at least one of trioxymethylene, lithium nitrate, dioxane, lithium fluorosulfonate, and fluoroethylene carbonate.

In an optional technical solution in this application, a mass percentage of the additive in the electrolyte is 0.1% to 10%, and specifically, may be 0.1%, 0.5%, 1%, 1.5%, 2%, 2.5%, 3%, 3.5%, 4%, 5%, 6%, 7%, 8%, 9%, or 10%, or certainly may be other values within the foregoing range, which is not limited herein. When the mass percentage of the additive in the electrolyte is excessively high, a large number of active lithium ions are consumed during cycling of the battery, which affects quality of the solid-state electrolyte membrane, thereby shortening life of the battery. When the mass percentage of the additive in the electrolyte is excessively low, it is difficult to inhibit polymerization of the 1,3-dioxolane by virtue of chemical activity of the additive, resulting in serious lithium precipitation of the battery. Preferably, the mass percentage of the additive in the electrolyte is 0.5% to 5%.

In an optional technical solution in this application, the separator is selected from a combination of one or more of a polyethylene film, a polypropylene film, and a polyvinylidene fluoride film. Certainly, an inorganic or organic coating layer may also be applied onto a surface of a separate substrate according to actual needs, so as to increase hardness of the cell or improve adhesion of the separator to cathode and negative electrode interfaces.

In an optional technical solution in this application, a preparation method of the electrochemical apparatus includes the following steps.

The positive electrode plate, the separator, and the negative electrode plate are stacked in sequence so that the separator is sandwiched between the positive electrode plate and the negative electrode plate for separation, to obtain a cell, or the resulting stack is wound to obtain a cell. The cell is placed in a packaging shell (may be a soft pack, a rectangular aluminum shell, a rectangular steel shell, a cylindrical aluminum shell, and a cylindrical steel shell), and the electrolyte is injected, followed by sealing, to obtain the electrochemical apparatus.

In a specific embodiment, the electrochemical apparatus is a lithium secondary battery, and the lithium secondary battery includes but is not limited to a lithium metal secondary battery, a lithium-ion secondary battery, a lithium polymer secondary battery, or a lithium-ion polymer secondary battery.

### Third aspect

This application further provides an electronic device, and the electronic device includes the electrochemical apparatus according to the second aspect. The electrochemical apparatus is configured to provide power for the electronic device.

In an optional technical solution in this application, the electronic device includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or an energy storage or lithium-ion capacitor.

### Examples

Content disclosed in this application is described in more detail in the following examples. These examples are merely intended for illustrative purposes because various modifications and changes made without departing from the scope of the content disclosed in this application are apparent to a person skilled in the art. Unless otherwise stated, all parts, percentages, and ratios reported in the following examples are based on masses, all reagents used in the examples are commercially available or synthesized in a conventional manner, and can be used directly without further treatment, and all instruments used in the examples are commercially available.

### (1) Preparation of positive electrode plate

A 10 wt% polyvinylidene fluoride binder was fully dissolved in N-methylpyrrolidone, and a 10 wt% carbon black conductive agent and an 80 wt% lithium iron phosphate positive electrode active material were added to prepare a uniformly dispersed positive electrode slurry. The positive electrode slurry was uniformly applied onto a surface of aluminum foil, and then the aluminum foil was fully dried in a vacuum drying oven. The obtained electrode plate was rolled and then punched out to obtain a target wafer.

### (2) Preparation of negative electrode plate

A carbon material was put into a solution containing concentrated sulfuric acid and concentrated nitric acid mixed in a volume ratio of 3:1, followed by stirring for 4 h, washing with deionized water, and filtering, and then the remains were dried in an oven at 80°C.

The carbon material and a polymer were added into water and stirred to a uniform slurry, and the slurry was applied onto copper foil and dried to obtain a required carbon material coating layer.

In an Ar atmosphere, lithium metal was put into a stainless crucible and heated to 300°C to be completely melted, and then alloy component powder was added into the liquid lithium metal and fully stirred for 2 h to ensure that the metal powder was uniformly mixed with the lithium metal liquid. After cooling, a lithium metal alloy active substance was obtained.

The lithium metal alloy active substance was compounded on a surface of the carbon material coating layer through cold pressing to obtain a lithium metal negative electrode plate.

### (3) A polyethylene (PE) porous polymer film was used as a separator.

### (4) Preparation of electrolyte

A mixed solution of ethylene glycol dimethyl ether (DME) and 1,3-dioxolane (DOL) was used as an organic solvent, and then a fully dried lithium salt lithium hexafluorophosphate was dissolved in the mixed organic solvent to prepare an electrolyte.

### (5) Preparation of button cell

### The positive electrode plate, the separator, and the negative electrode plate were stacked in sequence so that the separator was sandwiched between the positive electrode plate and the negative electrode plate for separation, and the electrolyte was added, to assemble a button cell.

For Examples 1 to 27 and Comparative Examples 1 to 10 of the negative electrode plates prepared according to the foregoing preparation methods, the electrolyte formulations thereof are the same. Specifically, the electrolyte includes DME and DOL in a volume ratio of 4:1, a concentration of the electrolyte is 4 mol/L, and the electrolyte further contains 0.5% lithium nitrate additive by mass. Specific parameters thereof are shown in Table 1.

**Table 1**

| Sample | Thickness of carbon material coating layer (µm) | Mass percentage of carbon material in carbon material coating layer (%) | Type of carbon material | Mass percentage of oxygen atoms in carbon material (%) | Type of alloy component R | Mass percentage of element Rin lithium metal alloy (%) |
|---|---|---|---|---|---|---|
| Example 1 | 0.3 | 95 | Carbon black, graphene, and carbon nanotubes | 0.3 | Mo | 4 |
| Example 2 | 1 | 95 | Carbon black, graphene, and carbon nanotubes | 0.3 | Mo | 4 |
| Example 3 | 3 | 95 | Carbon black, graphene, and carbon nanotubes | 0.3 | Mo | 4 |
| Example 4 | 5 | 95 | Carbon black, graphene, and carbon nanotubes | 0.3 | Mo | 4 |
| Example 5 | 7 | 95 | Carbon black, graphene, and carbon nanotubes | 0.3 | Mo | 4 |
| Example 6 | 10 | 95 | Carbon black, graphene, and carbon nanotubes | 0.3 | Mo | 4 |
| Example 7 | 3 | 90 | Carbon black, graphene, and carbon nanotubes | 0.3 | Mo | 4 |
| Example 8 | 3 | 94 | Carbon black, graphene, and carbon nanotubes | 0.3 | Mo | 4 |
| Example 9 | 3 | 96 | Carbon black, graphene, and carbon nanotubes | 0.3 | Mo | 4 |
| Example 10 | 3 | 97 | Carbon black, graphene, and carbon nanotubes | 0.3 | Mo | 4 |
| Example 11 | 3 | 99 | Carbon black, graphene, and carbon nanotubes | 0.3 | Mo | 4 |
| Example 12 | 3 | 95 | Carbon black | 0.3 | Mo | 4 |
| Example 13 | 3 | 95 | Graphene | 0.3 | Mo | 4 |
| Example 14 | 3 | 95 | Carbon nanotube | 0.3 | Mo | 4 |
| Example 15 | 3 | 95 | Carbon black, graphene, and carbon nanotubes | 0.1 | Mo | 4 |
| Example 16 | 3 | 95 | Carbon black, graphene, and carbon nanotubes | 0.2 | Mo | 4 |
| Example 17 | 3 | 95 | Carbon black, graphene, and carbon nanotubes | 0.4 | Mo | 4 |
| Example 18 | 3 | 95 | Carbon black, graphene, and carbon nanotubes | 0.3 | Ag | 4 |
| Example 19 | 3 | 95 | Carbon black, graphene, and carbon nanotubes | 0.3 | Ge | 4 |
| Example 20 | 3 | 95 | Carbon black, graphene, and carbon nanotubes | 0.3 | In | 4 |
| Example 21 | 3 | 95 | Carbon black, graphene, and carbon nanotubes | 0.3 | Zn | 4 |
| Example 22 | 3 | 95 | Carbon black, graphene, and carbon nanotubes | 0.3 | Bi | 4 |
| Example 23 | 3 | 95 | Carbon black, graphene, and carbon nanotubes | 0.3 | Mo | 1 |
| Example 24 | 3 | 95 | Carbon black, graphene, and carbon nanotubes | 0.3 | Mo | 3 |
| Example 25 | 3 | 95 | Carbon black, graphene, and carbon nanotubes | 0.3 | Mo | 5 |
| Example 26 | 3 | 95 | Carbon black, graphene, and carbon nanotubes | 0.3 | Mo | 7 |
| Example 27 | 3 | 95 | Carbon black, graphene, and carbon nanotubes | 0.3 | Mo | 10 |
| Comparative Example 1 | 11 | 95 | Carbon black, graphene, and carbon nanotubes | 0.3 | Mo | 4 |
| Comparative Example 2 | 0.1 | 95 | Carbon black, graphene, and carbon nanotubes | 0.3 | Mo | 4 |
| Comparative Example 3 | 3 | 88 | Carbon black, graphene, and carbon nanotubes | 0.3 | Mo | 4 |
| Comparative Example 4 | 3 | 99.5 | Carbon black, graphene, and carbon nanotubes | 0.3 | Mo | 4 |
| Comparative Example 5 | 3 | 95 | Carbon black, graphene, and carbon nanotubes | / | Mo | 4 |
| Comparative Example 6 | 3 | 95 | Carbon black, graphene, and carbon nanotubes | 0.08 | Mo | 4 |
| Comparative Example 7 | 3 | 95 | Carbon black, graphene, and carbon nanotubes | 0.3 | / | / |
| Comparative Example 8 | 3 | 95 | Carbon black, graphene, and carbon nanotubes | 0.3 | Mo | 0.5 |
| Comparative Example 9 | 3 | 95 | Carbon black, graphene, and carbon nanotubes | 0.3 | Mo | 12 |
| Comparative Example 10 | / | / | / | / | Mo | 4 |

| | | | | | | |
|---|---|---|---|---|---|---|
| "/" indicates that the percentage of the substance is 0. | | | | | | |

### Performance test

Performance parameter test of negative electrode plate

### (1) Thickness of carbon material coating layer

Sectional imaging was performed using a SEM on an electrode plate obtained by means of liquid nitrogen quenching cutting, and a thickness of a carbon material coating layer was measured in a secondary electron image.

### (2) Performance test of battery

At 25°C, the batteries prepared in the examples were charged to 50 at 0.1C, and the most negative potential obtained during charging was recorded as overpotential.

At 25°C, the batteries prepared in the examples and comparative examples were charged to 4 V at 0.1C and then discharged to 1 V at 0.1C, and subjected to such full charge and full discharge cycles until capacities of the lithium-ion batteries were less than 80% of initial capacities. First-cycle specific discharge capacity and the number of cycles were recorded, and specific data thereof are shown in Table 2.

**Table 2**

| Sample | Overpotential (mV) | First-cycle specific discharge capacity (mAh/g) | Cycles |
|---|---|---|---|
| Example 1 | 19 | 152 | 794 |
| Example 2 | 17 | 154 | 831 |
| Example 3 | 16 | 154 | 851 |
| Example 4 | 16 | 155 | 870 |
| Example 5 | 16 | 153 | 802 |
| Example 6 | 16 | 151 | 755 |
| Example 7 | 17 | 152 | 811 |
| Example 8 | 16 | 153 | 839 |
| Example 9 | 16 | 153 | 849 |
| Example 10 | 16 | 153 | 820 |
| Example 11 | 20 | 149 | 756 |
| Example 12 | 17 | 152 | 818 |
| Example 13 | 17 | 151 | 801 |
| Example 14 | 18 | 151 | 793 |
| Example 15 | 18 | 152 | 797 |
| Example 16 | 17 | 153 | 823 |
| Example 17 | 19 | 150 | 777 |
| Example 18 | 16 | 153 | 822 |
| Example 19 | 17 | 152 | 805 |
| Example 20 | 16 | 151 | 785 |
| Example 21 | 17 | 151 | 795 |
| Example 22 | 18 | 150 | 758 |
| Example 23 | 18 | 151 | 771 |
| Example 24 | 17 | 152 | 799 |
| Example 25 | 16 | 154 | 831 |
| Example 26 | 17 | 153 | 819 |
| Example 27 | 18 | 152 | 785 |
| Comparative Example 1 | 16 | 147 | 723 |
| Comparative Example 2 | 20 | 150 | 741 |
| Comparative Example 3 | 19 | 150 | 785 |
| Comparative Example 4 | 22 | 142 | 702 |
| Comparative Example 5 | 21 | 150 | 755 |
| Comparative Example 6 | 20 | 151 | 788 |
| Comparative Example 7 | 25 | 148 | 684 |
| Comparative Example 8 | 19 | 150 | 755 |
| Comparative Example 9 | 18 | 145 | 766 |
| Comparative Example 10 | 24 | 147 | 621 |

It can be learned from the test results of Examples 1 to 6 and Comparative Examples 1 and 2 that when the thickness of the carbon material coating layer on the surface of the copper foil is 0.3 µm to 10 µm, the battery has high energy density, and the carbon material coating layer can reduce the lithiation overpotential and suppress formation of lithium dendrites, thereby improving cycling performance of the battery. It can be learned from the test result of Comparative Example 1 that when the carbon material coating layer is excessively thick, energy density of the battery is decreased. It can be learned from the test result of Comparative Example 2 that when the carbon material coating layer is excessively thin, there are very few nucleation sites of the lithium metal, and it is difficult to reduce the lithiation overpotential, so that the lithium dendrites are prone to be formed on the surface of the electrode plate, thereby decreasing the cycling performance of the battery. Preferably, the thickness of the carbon material coating layer is 1 µm to 7 µm.

It can be learned from the test results of Examples 7 to 11 and Comparative Examples 3 and 4 that when the mass percentage of the carbon material in the carbon material coating layer is 90% to 99%, the lithiation overpotential can be effectively reduced, and growth of the lithium dendrites can be suppressed, so that the battery has required cycling performance. It can be learned from the test result of Comparative Example 3 that when the mass percentage of the carbon material in the carbon material coating layer is excessively low, conductive performance of the carbon material coating layer is decreased, so that the first-cycle specific discharge capacity of the battery is decreased, and the lithiation overpotential is reduced insignificantly, thereby decreasing the cycling performance of the battery. It can be learned from the test result of Comparative Example 4 that when the mass percentage of the carbon material in the carbon material coating layer is excessively high, adhesion of the carbon material coating layer is decreased, and the problems such as peeling off and cracking of the coating layer are prone to occur during processing, thereby decreasing the cycling performance of the battery. Preferably, the mass percentage of the carbon material in the carbon material coating layer is 94% to 97%.

It can be learned from the test results of Examples 3 and 12 to 14 that compared with the use of a single carbon material, the mixed use of two or more than two carbon materials can increase dimensions of conductive performance of the carbon materials, improve the conductive performance of the carbon material, and reduce the lithiation overpotential, thereby increasing the first-cycle specific discharge capacity of the battery.

It can be learned from the test results of Examples 3 and 15 to 17 and Comparative Examples 5 and 6 that the carbon material includes the oxygen-containing group, and the oxygen-containing group has good lithiophilicity and it is easy to combine it preferentially with lithium ions to form a uniform lithium metal core, which reduces overpotential of a subsequent lithiation reaction, and suppresses the formation and growth of the lithium dendrites, thereby improving cycling performance of the lithium metal negative electrode. The oxygen content in the carbon material of Comparative Example 6 is excessively low, and has slight impact on improving nucleation of the lithium metal. Overpotential of the lithiation reaction in Comparative Example 6 is decreased as compared with Comparative Example 5 (the carbon material contains no oxygen), but is not significantly decreased as compared with Examples 3 and 15 to 17.

It can be learned from the test results of Examples 3 and 18 to 22 and Comparative Example 7 that when the alloy element in the lithium metal alloy changes, a potential barrier on intercalation of the lithium metal is affected, and the growth degree of the lithium dendrites is changed. When the surface of the carbon material coating layer of Comparative Example 7 includes only the lithium metal, the lithium dendrites cannot grow along the alloy phase toward the carbon material coating layer, so that it is prone to form the lithium dendrites on the surface of the negative electrode plate, thereby affecting the cycling performance of the battery.

It can be learned from the test results of Examples 3 and 23 to 27 and Comparative Examples 8 and 9 that when the mass percentage of element R in the lithium metal alloy is 1% to 10%, lithiation overpotential can be effectively reduced, thereby suppressing the growth of the lithium dendrites. When the mass percentage of element R in the lithium metal alloy of Comparative Example 8 is excessively low, the percentage of the solid solution alloy in the lithium metal alloy is reduced, so that the growth of the lithium dendrites cannot be suppressed through the solid solution alloy phase change. When the mass percentage of element R in the lithium metal alloy of Comparative Example 9 is excessively high, the percentage of lithium in the lithium metal alloy is reduced, which affects kinetic performance of the battery, causing a decrease in the energy density and rate performance of the battery. Preferably, the mass percentage of element R in the lithium metal alloy is 3% to 7%.

It can be learned from the test results of Example 3 and Comparative Example 10 that no carbon material coating layer is formed on the surface of the copper foil in Comparative Example 10, and the lithium metal alloy is directly attached to the copper foil. Due to poor infiltration performance of the lithium metal and the copper foil, adhesion between the surface of the copper foil and the lithium metal is decreased, and the overpotential increases, thereby affecting the kinetic performance of the battery.

Further, for Examples 28 to 42 and Comparative Examples 11 to 17 of the negative electrode plates prepared according to the foregoing preparation method, the foregoing examples and comparative examples use the negative electrode plates prepared as in Example 3, and the electrolyte formulations are different. Specific parameters of the formulations are shown in Table 3.

**Table 3**

| Sample | Concentration of electrolyte (mol/L) | Volume ratio of DME and DOL | Mass percentage of additive (%) | Type of additive |
|---|---|---|---|---|
| Example 3 | 4 | 4:1 | 0.5 | LiNO₃ |
| Example 28 | 0.5 | 4:1 | 0.5 | LiNO₃ |
| Example 29 | 2 | 4:1 | 0.5 | LiNO₃ |
| Example 30 | 5 | 4:1 | 0.5 | LiNO₃ |
| Example 31 | 7 | 4:1 | 0.5 | LiNO₃ |
| Example 32 | 4 | 1:2 | 0.5 | LiNO₃ |
| Example 33 | 4 | 1:1 | 0.5 | LiNO₃ |
| Example 34 | 4 | 5:1 | 0.5 | LiNO₃ |
| Example 35 | 4 | 7:1 | 0.5 | LiNO₃ |
| Example 36 | 4 | 10:1 | 0.5 | LiNO₃ |
| Example 37 | 4 | 4:1 | 0.1 | LiNO₃ |
| Example 38 | 4 | 4:1 | 2 | LiNO₃ |
| Example 39 | 4 | 4:1 | 5 | LiNO₃ |
| Example 40 | 4 | 4:1 | 10 | LiNO₃ |
| Example 41 | 4 | 4:1 | 0.5 | LiSO₃F |
| Example 42 | 4 | 4:1 | 0.5 | FEC |
| Comparative Example 11 | 0.2 | 4:1 | 0.5 | LiNO₃ |
| Comparative Example 12 | 8 | 4:1 | 0.5 | LiNO₃ |
| Comparative Example 13 | 4 | 1:3 | 0.5 | LiNO₃ |
| Comparative Example 14 | 4 | 11:1 | 0.5 | LiNO₃ |
| Comparative Example 15 | 4 | 4:1 | 0.05 | LiNO₃ |
| Comparative Example 16 | 4 | 4:1 | 11 | LiNO₃ |
| Comparative Example 17 | 4 | 4:1 | / | / |

### (3) Performance test of battery

At 25°C, the batteries prepared in the examples were charged to 50 at 0.1C, and the most negative potential obtained during charging was recorded as overpotential.

At 25°C, the batteries prepared in the examples and comparative examples were charged to 4 V at 0.1C and then discharged to 1 V at 0.1C, and subjected to such full charge and full discharge cycles until capacities of the lithium-ion batteries were less than 80% of initial capacities. First-cycle specific discharge capacity and the number of cycles were recorded, and specific data thereof are shown in Table 4.

**Table 4**

| Sample | Overpotential (mV) | First-cycle specific discharge capacity (mAh/g) | Cycles |
|---|---|---|---|
| Example 3 | 16 | 154 | 851 |
| Example 28 | 25 | 141 | 661 |
| Example 29 | 20 | 149 | 771 |
| Example 30 | 22 | 145 | 700 |
| Example 31 | 27 | 138 | 650 |
| Example 32 | 19 | 149 | 731 |
| Example 33 | 17 | 151 | 766 |
| Example 34 | 17 | 153 | 814 |
| Example 35 | 19 | 151 | 798 |
| Example 36 | 20 | 149 | 769 |
| Example 37 | 20 | 150 | 788 |
| Example 38 | 18 | 153 | 834 |
| Example 39 | 19 | 151 | 810 |
| Example 40 | 25 | 140 | 688 |
| Example 41 | 20 | 150 | 798 |
| Example 42 | 22 | 148 | 756 |
| Comparative Example 11 | 32 | 138 | 621 |
| Comparative Example 12 | 30 | 135 | 600 |
| Comparative Example 13 | 22 | 146 | 711 |
| Comparative Example 14 | 22 | 145 | 699 |
| Comparative Example 15 | 21 | 147 | 725 |
| Comparative Example 16 | 29 | 135 | 608 |
| Comparative Example 17 | 32 | 130 | 555 |

It can be learned from the test results of Examples 3 and 28 to 31 and Comparative Examples 11 and 12 that when the concentration of the electrolyte is 0.5 mol/L to 7 mol/L, the battery has good kinetic performance, thereby ensuring the cycling performance of the battery. It can be learned from the test result of Comparative Example 11 that when the concentration of the electrolyte is excessively low, the concentration of the lithium salt is excessively low, which aggravates concentration polarization during cycling, and promotes the growth of the lithium dendrites, thereby decreasing the cycling performance of the battery. It can be learned from the test result of Comparative Example 12 that when the concentration of the electrolyte is excessively high, viscosity of the electrolyte is excessively high, thereby decreasing the kinetic performance of the battery. Preferably, the concentration of the electrolyte is 2 mol/L to 5 mol/L.

It can be learned from the test results of Examples 3 and 32 to 36 and Comparative Examples 13 and 14 that when the volume ratio of DME and DOL is (0.5-10):1, the electrolyte can form a more stable solid-state electrolyte membrane on the surface of the lithium metal alloy, so that the side reactions are reduced, and the growth of the lithium dendrites is suppressed, helping improve the cycling performance of the battery. It can be learned from the test result of Comparative Example 13 that when the volume ratio of DME and DOL is excessively small, the percentage of the 1,3-dioxolane is excessively high, the 1,3-dioxolane is prone to undergo a self-polymerization reaction, and it is difficult to form an effective solid-state electrolyte membrane, resulting in lithium precipitation of the battery, thereby decreasing the cycling performance. It can be learned from the test result of Comparative Example 14 that when the volume ratio of DME and DOL is excessively large, meaning that the percentage of the ethylene glycol dimethyl ether is excessively high and the percentage of the 1,3-dioxolane is excessively low, it is difficult to form a stable solid-state electrolyte membrane by exploiting synergy between the 1,3-dioxolane and the ethylene glycol dimethyl ether, thereby decreasing the cycling performance of the battery. Preferably, the volume ratio of the ethylene glycol dimethyl ether and the 1,3-dioxolane is (1-7): 1.

It can be learned from the test results of Examples 3 and 37 to 40 and Comparative Examples 15 and 16 that when the mass percentage of the additive in the electrolyte is 0.1% to 10%, lithium precipitation can be suppressed, helping improve the cycling performance of the battery. It can be learned from the test result of Comparative Example 15 that when the mass percentage of the additive in the electrolyte is excessively low, it is difficult to inhibit polymerization of the 1,3-dioxolane (DOL) by virtue of chemical activity of the additive, resulting in serious lithium precipitation of the battery, thereby decreasing the cycling performance of the battery. It can be learned from the test result of Comparative Example 16 that when the mass percentage of the additive in the electrolyte is excessively high, a large number of active lithium ions are consumed during cycling of the battery, which affects quality of the solid-state electrolyte membrane, resulting in serious capacity decay of the battery. Preferably, the mass percentage of the additive in the electrolyte is 0.5% to 5%.

It can be learned from the test results of Examples 3, 41 and 42 and Comparative Example 17 that lithium nitrate is decomposed at a low potential to form lithium nitride, and the inorganic protection layer formed in situ uniformly covers the surface of the lithium metal to stabilize the whole structure of the SEI (solid electrolyte interface film), thereby improving the cycling performance of the battery. Compared with lithium nitrate, fluoroethylene carbonate and lithium fluorosulfonate additives have a slight impact on stability of the electrolyte, but can also effectively improve the cycling performance of the battery. The additives are not added in Comparative Example 17, so that the side reactions on the surface of the electrode plate are increased, thereby decreasing the cycling performance of the battery.

Although this application is disclosed above with preferred embodiments, they are not intended to limit the claims. Any person skilled in the art can make several possible changes and modifications without departing from the concept of this application. Therefore, the protection scope of this application shall be subject to the scope defined by the claims of this application.

## Claims

1. A lithium metal negative electrode plate, comprising:
copper foil;
a carbon material coating layer formed on at least part of a surface of the copper foil, wherein thickness of the carbon material coating layer is less than or equal to 10 µm, and the carbon material coating layer comprises a carbon material and a polymer binder; and
a lithium metal alloy formed on at least part of a surface of the carbon material coating layer.

2. The lithium metal negative electrode plate according to claim 1, wherein the lithium metal negative electrode plate satisfies at least one of the following conditions:
(1) the carbon material comprises at least one of meso-carbon microbeads, graphite, natural graphite, expanded graphite, artificial graphite, glassy carbon, carbon-carbon composite material, carbon fibers, hard carbon, porous carbon, highly oriented graphite, three-dimensional graphite, carbon black, carbon nanotubes, and graphene;
(2) a mass percentage of the carbon material in the carbon material coating layer is 90% to 99%;
(3) the thickness of the carbon material coating layer is 0.3 µm to 10 µm; and
(4) the thickness of the carbon material coating layer is 1 µm to 7 µm.

3. The lithium metal negative electrode plate according to claim 1 or 2, wherein the lithium metal negative electrode plate satisfies at least one of the following conditions:
(5) the carbon material comprises an oxygen-containing group, wherein the oxygen-containing group is selected from at least one of carboxyl group, hydroxyl group, and ether group; and
(6) the carbon material comprises an oxygen-containing group, wherein a mass percentage of oxygen atoms in the carbon material is ≥ 0.1%.

4. The negative electrode plate according to claim 1, wherein a chemical formula of the lithium metal alloy is LiR, and metal R is selected from at least one of Ag, Mo, In, Ge, Bi, and Zn.

5. The negative electrode plate according to claim 4, wherein the lithium metal negative electrode plate satisfies at least one of the following conditions:
(7) a mass percentage of element R in the lithium metal alloy is 1% to 10%; and
(8) the lithium metal alloy is a solid solution alloy.

6. The negative electrode plate according to claim 1, wherein the polymer binder comprises at least one of sodium cellulose, sodium carboxymethyl cellulose, hydroxypropyl cellulose, sodium hydroxymethyl cellulose, potassium hydroxymethyl cellulose, diacetyl cellulose, polyacrylic acid, sodium alginate, styrene-butadiene rubber, acrylic butadiene rubber, polypyrrole, polyaniline, epoxy resin, and guar gum.

7. An electrochemical apparatus, comprising a positive electrode plate, a negative electrode plate, a separator, and an electrolyte, wherein the negative electrode plate is the negative electrode plate according to any one of claims 1 to 6.

8. The electrochemical apparatus according to claim 7, wherein the electrolyte comprises a solvent and a lithium salt, and the electrolyte satisfies at least one of the following conditions:
(9) the lithium salt comprises at least one of lithium hexafluorophosphate, lithium tetrafluoroborate, lithium difluorophosphate, lithium bis(trifluoromethanesulfonyl)imide, lithium bis(fluorosulfonyl)imide, lithium bis(oxalato)borate, or lithium difluoro(oxalato)borate;
(10) the solvent comprises ethylene glycol dimethyl ether and 1,3-dioxolane;
(11) the solvent comprises ethylene glycol dimethyl ether and 1,3-dioxolane, wherein a volume ratio of the ethylene glycol dimethyl ether and the 1,3-dioxolane is (0.5-10): 1; and
(12) a concentration of the electrolyte is 0.5 mol/L to 7 mol/L.

9. The electrochemical apparatus according to claim 7, wherein the electrolyte satisfies at least one of the following conditions:
(13) the electrolyte further comprises an additive, wherein the additive comprises at least one of trioxymethylene, lithium nitrate, dioxane, lithium fluorosulfonate, and fluoroethylene carbonate; and
(14) the electrolyte further comprises an additive, wherein a mass percentage of the additive in the electrolyte is 0.1% to 10%.

10. An electronic device, comprising the electrochemical apparatus according to any one of claims 7 to 9.
